# EUROPEAN PATENT SPECIFICATION

(11) **EP 4 072 710 B1**
(45) Date of publication and mention of the grant of the patent: **02.04.2025**
(21) Application number: 20899773.4
(22) Date of filing: 09.12.2020
(51) Int. Cl.: B01D 61/02, B01D 61/04, B01D 61/58, C02F 1/44, B01D 69/12, B01D 69/02, C02F 1/38, C02F 103/38, B01D 61/14

(54) **METHOD FOR REMOVING CONTAMINANTS FROM AN AQUEOUS MATERIAL**
VERFAHREN ZUM ENTFERNEN VON VERUNREINIGUNGEN AUS EINEM WÄSSRIGEN MATERIAL
PROCÉDÉ D'ÉLIMINATION DE CONTAMINANTS D'UN MATÉRIAU AQUEUX

(30) Priority: 09.12.2019 AU 2019904657
(43) Date of publication of application: 19.10.2022
(73) Proprietor: Akvotek Pty Ltd, Hawthorn, Victoria 3122 (AU)
(72) Inventor: FORBES, Mark, East Ivanhoe, Victoria 3079 (AU)
(74) Representative: Zacco Sweden AB
(86) International application number: PCT/AU2020/051352
(87) International publication number: WO 2021/113916

(56) References cited:
- WO-A1-2011/000052
- WO-A1-2012/059429
- WO-A1-2012/059430
- CN-B- 101 962 235
- US-A1- 2016 039 686
- US-B1- 6 187 197

## Description

### FIELD

The present invention relates to a method of removing contaminants from an aqueous material. Disclosed herein but not claimed is an apparatus for removing contaminants from an aqueous material feed stream.

In particular, the present invention relates to treatment of waste water for reclaiming or recycling waste water derived from a polymerisation process.

### BACKGROUND

A number of polymers are manufactured by emulsion and suspension polymerisation. These polymers include polyvinylchloride (PVC), polystyrene (PS), poly(methyl) methacrylate (PMM), polyacrylate (PA) and the like.

Typically, suspension polymerisation reactions result in the production of particles having a size ranging between about 50 µm and 5 mm in diameter. Typically, emulsion polymerisation reactions result in the production of particles having a size ranging between about 2 µm and 150 µm.

Typically, water and other additives are added to a polymerisation process either before, during or after polymerisation. Additives include substances that control the formation of monomer droplets and the resulting particles of polymers. Examples of additives used in a polymerisation process include particle stabilisers, such as polyvinyl alcohol (PVA), surfactants to control and adjust the size of the droplets, catalysts and initiators which are added either at the beginning of the process or during the process and reaction termination reagents.

The polymerisation process typically results in a slurry of powdered polymer in water. The powdered polymer is removed by centrifugation and dried.

The supernatant from the centrifugation step is collected as waste water in a tank and cannot be reused unless it is treated to remove residual polymer particles and other contaminants.

Contaminants include particulate and non-particulate additives, such as salts, surfactant and stabiliser molecules. The waste water derived from a PVC polymerisation reaction may further contaminants such as free chlorine as a result of decomposition of the vinyl chloride monomer and polymer particulates.

One of the problems associated with the recovery of waste waters from polymerisation reactions, particularly polymerisation reactions for manufacturing PVC, is the need to cool the waste water at one or more stages during the recovery process to minimise biofouling.

This is because some contaminants in the waste water, such as sodium lauryl sulphate, promotes bacteria growth in membrane filters used in existing waste water recovery technology operating on a cooled water process. Some bacteria, such as sulphur reducing bacteria, produce hydrogen sulphide, which is poisonous, corrosive, and flammable and therefore undesirable in an industrial environment. However, cooling of the waste water comes with associated challenges.

Cooling of the waste water being recovered reduces solubility of some synthesised polymers, such as PVC, and contaminants present in the waste water, such as stabilizers, surfactants and other residual chemicals added with the water to the polymerisation reaction.

Additionally, the presence of fine polymer particles produced during the polymerisation reaction, such as PVC particles, are difficult to filter.

PVC particles tend to agglomerate thereby blocking or significantly reducing the efficiency of the filter used to remove contaminants from the waste water.

Additionally, PVC particles have polyvinyl alcohol (PVA) attached thereto which acts to bind the PVC particles together to increase the tendency for the PVC to bridge gaps or openings thereby restricting the flow of fluid through filters in the recovery process. WO 2012/059430 A1, WO 2012/059429 A1 and WO 2011/000052 A1 disclose methods of removing contaminants from an aqueous stream derived from a polymerisation process.

Existing membrane technology does not allow for effective recovery of waste water.

There is a need for a new method or technique of recovering waste water which can effectively filter particulate and non-particle contaminants.

It is also desirable for an improved membrane technology which reduces biofouling.

### SUMMARY OF THE INVENTION

The invention relates to a method according to claim 1. Preferred embodiments are further defined in the dependent claims.

According to the invention, there is provided method of removing contaminants from an aqueous material, the method comprising the steps of:
providing an aqueous material comprising one or more contaminants including particulate contaminants;
subjecting the aqueous material to a first filtration step to substantially remove particulate contaminants from the aqueous material thereby forming a partially filtered aqueous material; and
subjecting the partially filtered aqueous material to a second filtration step to remove at least part of the remaining contaminants from the partially filtered aqueous material to form a recovered portion of the aqueous material in which the amount of contaminant is reduced to an amount allowing re-use of the recovered portion of the aqueous material,
wherein the second filtration step includes passing the partially filtered aqueous material across a partially permeable membrane at a temperature higher than 50°C.

The second filtration step includes subjecting the aqueous material to reverse osmosis at a temperature higher than 50°C.

The first filtration step includes subjecting the aqueous material to microfiltration.

The first filtration step includes centrifuging the aqueous material to reduce the concentration of particulate contaminants in the aqueous material before subjecting the aqueous material to microfiltration.

The first filtration step includes:
(i) directing the aqueous material to a hydrocyclone to form an overflow stream and an underflow stream wherein the overflow stream comprises a reduced concentration of particulate contaminants compared to the underflow stream; and
(ii) subjecting the overflow stream to microfiltration to remove particulate contaminants, thereby forming the partially filtered aqueous material.

The step of subjecting the overflow stream to microfiltration may be conducted at temperatures in the range from about 50°C to about 90°C.

In some embodiments, the method includes directing the underflow stream to a hydrocyclone to form an overflow stream that is combinable with the aqueous material.

In some embodiments, the method includes directing the first underflow stream and/or the second underflow stream to a particulate contaminants recovery process.

In some embodiments, the first filtration step includes:
(i) directing the aqueous material to a hydrocyclone to form a first overflow stream and a first underflow stream wherein the first overflow stream comprises a reduced concentration of particulate contaminants compared to the underflow stream; and
(ii) directing the first overflow stream to a hydrocyclone to form a second overflow stream and a second underflow stream wherein the second overflow stream comprises a reduced concentration of particulate contaminants compared to the second underflow stream; and
(iii) subjecting the second overflow stream to microfiltration, thereby forming the partially filtered aqueous material.

The step of subjecting the overflow stream to microfiltration may be conducted at temperatures in the range from about 50°C to about 90°C.

In some embodiments, the method further includes directing the first underflow stream and/or the second underflow stream to a hydrocyclone to form an overflow stream that is combinable with the aqueous material.

In some embodiments, the method further includes directing the first underflow stream and/or the second underflow stream to a particulate contaminants recovery process.

Not according to the claims, there is described an apparatus for removing contaminants from an aqueous material feed stream comprising:
a first filtration module configured to receive an aqueous material feed stream comprising one or more contaminants, including particulate contaminants, and reduce the concentration of particulate contaminants in the aqueous material feed stream to form a pre-treated aqueous material stream,
a second filtration module that is in fluid communication with the first filtration module, the second filtration module being configured to receive the pre-treated aqueous material stream and to substantially remove the particulate contaminants from the aqueous material stream to form a partially filtered aqueous material stream,
a third filtration module that is in fluid communication with the second filtration module, third filtration module being configured to receive the partially filtered aqueous material stream,
wherein the third filtration module includes a partially permeable membrane that can withstand operating temperatures higher than 50°C and is configured to remove at least part of the remaining contaminants to form a recovered portion of the aqueous material feed stream in which the amount of contaminants is reduced to allow re-use of the recovered portion of the aqueous material feed stream.

In some forms, the first filtration module includes at least one separator that is configured to remove particulate contaminants having a diameter of at least 10 µm. The at least one separator may be a hydrocyclone.

In some forms, the second filtration module includes at least one microfiltration membrane configured to remove particulate contaminants having a particle size larger than 0.5 µm. The at least one microfiltration membrane may be configured to withstand operating temperatures of up to about 90°C.

In some forms, the partially permeable membrane is a reverse osmosis membrane.

Not according to the claims, there is further described an apparatus for removing contaminants from an aqueous material feed stream comprising:
a filtration module configured to receive an aqueous material feed stream comprising one or more non-particulate contaminants, wherein the filtration module includes a partially permeable membrane that can withstand operating temperatures higher than 50°C and is configured to remove at least part of the non-particulate contaminants to form a recovered portion of the aqueous material feed stream in which the amount of contaminant is reduced to an amount allowing re-use of the recovered portion of the aqueous material feed stream.

In some forms, the partially permeable membrane is a reverse osmosis membrane.

### BRIEF DESCRIPTION OF DRAWINGS

Forms of the process will now be described by way of example with reference to the accompanying drawings in which:
Figure 1 is a flow diagram illustrating a method of removing non-particulate contaminants from an aqueous material.
Figure 2 is a schematic of an apparatus for removing contaminants from an aqueous material.
Figure 3 is a schematic of an apparatus for removing contaminants from an aqueous material.
Figure 4 is a flow diagram illustrating a method of removing particulate and non-particulate contaminants from an aqueous material.
Figure 5 is a schematic perspective view of a microfiltration membrane.
Figure 6 a side cross-sectional view of a microfiltration membrane module.
Figure 7 is a schematic of an apparatus for removing particulate and non-particulate contaminants from an aqueous material.
Figure 8 is a flow diagram illustrating a method of removing particulates and non-particulates contaminants from an aqueous material.
Figure 9 is a schematic of an apparatus for removing particulate contaminants from an aqueous material including a bank of hydrocyclones.

### DETAILED DESCRIPTION

The invention relates to treatment of an aqueous material to remove contaminants to provide a re-usable recovered portion of the aqueous material.

In an exemplary embodiment, the method is used to recycle, reclaim or purify waste water, derived from a chemical process, suitably a PVC production process. The waste water is treated to remove contaminants, such as particles and chemical substances used in the chemical process and form a recovered portion of water in which the amount of contaminant is reduced to an amount thereby allowing re-use of the recovered portion of water.

The term "contaminant" as used herein includes any potentially undesirable substance (physical, chemical or biological) either in particulate or non-particulate form. Contaminants include, without being limited to, particles, such as polymer particles or any other type of particle, chemical additives, such as salts, surfactant, stabilisers or any other undesirable chemicals, byproducts or side products of a chemical process, such as free chlorine for a PVC polymerisation reaction, microorganisms, such as bacteria, or any other biological or chemical substance that can adversely affect the safety and quality of an aqueous material.

Additionally, the terms "partially permeable" and "semi- permeable" as used herein with reference to membranes are used interchangeably.

Additionally, the terms "feed stream", "aqueous feed stream", "aqueous material" and "waste water" as used herein are used interchangeably.

In one embodiment the present invention relates to methods of improving the quality of waste water derived from polymerisation processes and comprises treatments steps to improve the quality of the waste water to such an extent that allows the treated waste water to be reused in a variety of ways.

The amount of residual contaminant contained in the water recovered by the method according to the invention is sufficiently low that the recovered water can be reused as feed water for further polymerisation reactions.

The method according to the invention finds particular application as treatments of waste water by-products resulting from polymerisation reactions forming, for example, polyvinylchloride (PVC). Contaminants or unwanted materials formed in the polymerisation process, particularly small sized particles often referred to as "fines" remain in the waste water and must be removed before re-use of the aqueous material.

Although methods and apparatus will be described with reference to particular embodiments, it is to be understood that the scope of protection is not restricted to the described embodiments but rather the scope of protection is defined by the claims.

In the method according to the invention, the recycled water obtained by treating waste water derived from a polymerisation process must possess similar properties or characteristics of fresh feed water or at least have a similar level of constituents of fresh feed water to be suitable for re-use as feed water for another polymerisation process.

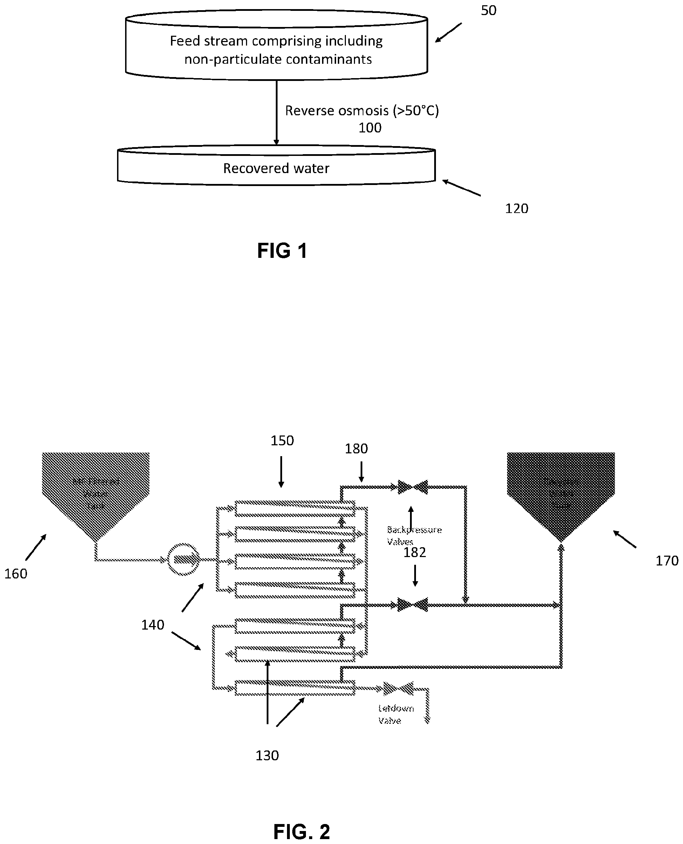

An example of a method of removing contaminants from an aqueous material is described below with reference to Figure 1.

In the described example, an aqueous feed stream, such as waste water, containing one or more non-particulate contaminants is provided. The feed stream is, for instance, waste water derived from a chemical process containing a negligible amount of particulate contaminants. In some cases, feed stream is waste water that has undergone a pre-treatment filtration process to remove particulate contaminants.

The method includes filtering the aqueous material to remove at least part of the one or more non-particulate contaminants to form a recovered portion of the aqueous material in which the amount of contaminant is reduced to an amount allowing re-use of the recovered portion of the aqueous material.

In the described example the aqueous feed stream 50 is subjected to reverse osmosis 100 at a temperature higher than 50°C to provide recovered water 120.

In some forms, not shown, the recovered water is subjected to additional reverse osmosis processes at a temperature higher than 50°C to further reduce the amount of undesired contaminants in the recovered aqueous material and thereby improving the quality of the recovered water.

Any suitable partially permeable membrane that can withstand temperatures higher than 50°C may be used.

The recovered portion of aqueous material is re-usable as a water feed in chemical reactors, demineralisation water plants or any other suitable application or process.

The method includes the use of a reverse osmosis membrane.

During osmosis, a solvent travels from a region of low solute concentration, through a partially permeable membrane, to area region of high solute concentration.

Conversely, reverse osmosis is a process involving the application of pressure to pass a solvent across a semi-permeable membrane to selectively remove components from the solvent.

In some forms, the reverse osmosis membranes comprise cellulose acetate membranes and thin film composite (TFC) membranes. Cellulose acetate membranes are tolerant to free chlorine being present in the water being treated at levels of up to about 2 ppm. TFC membranes include a polyamide active layer cast onto an ultra filtration layer, which in turn has been cast onto a non-woven layer.

Both cellulose acetate membranes and TFC membranes are spiral wound.

Reverse osmosis membrane can have any suitable or desirable form and be made of different type of material.

Advantageously, reverse osmosis membranes are very effective in removing non-particulate contaminants. Some osmosis membranes can tolerate the presence of small particles up to 0.5 µm. However, the efficiency of these membrane is negatively affected by the presence of larger solid particles in an aqueous feed stream.

Therefore, when an aqueous feed stream contains particulate contaminants, a multistage filtration process is required as explained in more detail below.

Figure 2 is a schematic flow diagram of an apparatus for removing contaminants from an aqueous material including reverse osmosis membrane modules 140 arranged in a multistage cascade. Suitably, the bank of membrane modules are located between a feed water tank 160 and a recycled water tank 170.

In Figure 2, seven membranes 130 are arranged in two modules comprising four and three membranes respectively. The multistage cascade arrangement 150 provides improved recovery of permeate water or aqueous material for reuse in subsequent reactions, such as PVC polymerisation reactions.

The water recovered with such cascade arrangement is at least about 93% of the feed water.

However, in some forms the membrane may be disposed in a cascade arrangement as singular element or may be disposed in any other suitable configuration spatial arrangement, sequence, pathway or the like.

In other forms, any other suitable number of membranes may be used.

Suitably, the membranes have a length of about 1 m (40 inches) and a diameter in the range of about 5 cm (2 inches) to 25 cm (10 inches). In other forms the membranes have a diameter of about 6 cm, 10 cm or 20 cm (2.5 inches, 4 inches or 8 inches). However, the membranes can have any suitable length and/or diameter.

Figure 2 illustrates a backpressure path 180 that is regulated by valves 182 provides feed pressure to force the aqueous feed stream through pores in the membrane. The reverse osmosis process needs to operate at sufficient pressure to overcome the osmotic pressure generated by the contaminants in the feed stream.

In the example of Figure 2, the osmotic pressure is approximately 300 kPa. As the osmotic pressure in stage one of the cascade is only approximately 70 kPa, the feed stream is backpressured to prevent the permeation rate from being too high in stage one and two.

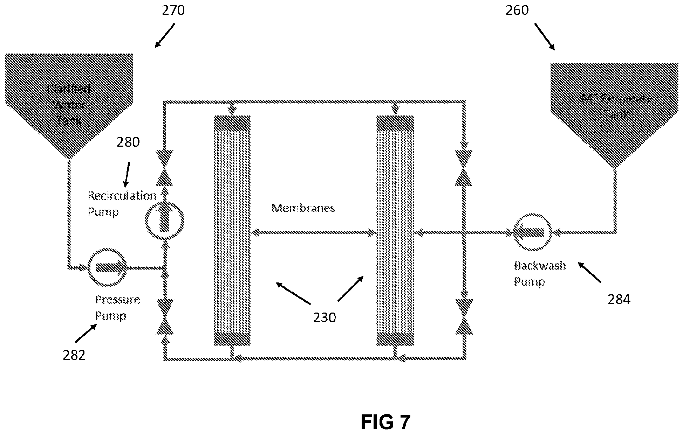

Figure 7 illustrates an apparatus for removing particulate and non-particulate contaminants from a microfiltered feed tank 260. The stream from the microfiltered feed tank 260 is passed through reverse osmosis membrane modules 230 before being stored in clarified water tank 270. Various pumps 280, 282, 284 control the fluid flow through the apparatus.

In Figure 2, seven membranes 130 are arranged in two modules comprising four and three membranes respectively. The multistage cascade arrangement 150 provides improved recovery of permeate water or aqueous material for reuse in subsequent reactions, such as PVC polymerisation reactions.

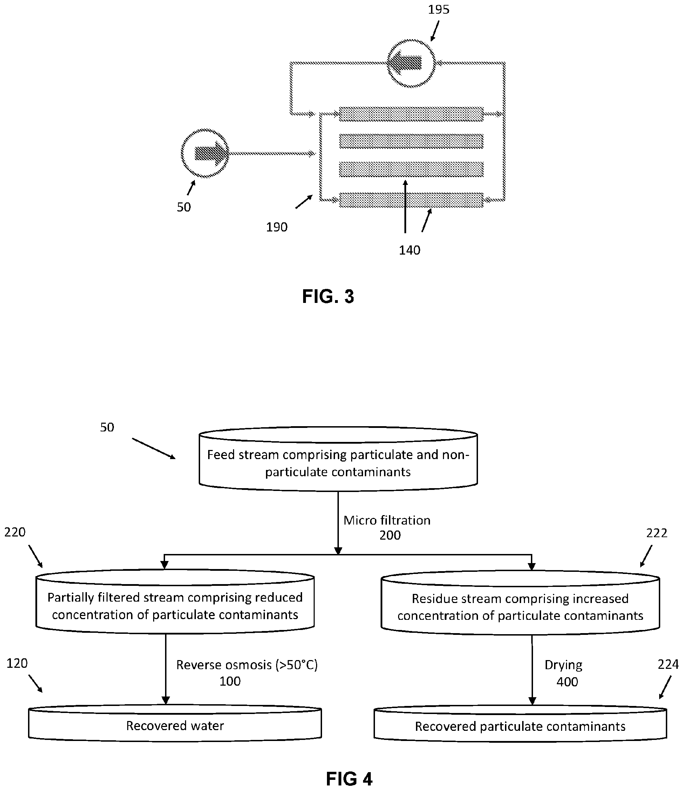

Figure 3 is schematic of an alternative reverse osmosis membrane module design. This reverse osmosis module design has an internal recirculation system 190 with a bleed off 195 to control the overall recovery process.

The arrangement of the membrane module 140 and the path length of the membranes is determined based on the feed stream 50 flow in each membrane of the membrane module to optimise of the feed stream flow for each membrane.

Conventional membrane reverse osmosis membranes comprise materials sensitive to elevated temperatures.

Typically, conventional reverse osmosis membranes are restricted to operating at temperatures of no more than around 45°C, while the temperature of the feed stream is usually above 50°C.

For example, some traditional reverse osmosis membranes designed for water applications includes sealing devices, such brine seals containing plastic or rubber components, that seal the external part of the membranes against their housing to prevent by-passing of feed water around the membrane. The sealing devices prevent the feed stream from flowing around the membrane, thereby force the feed steam to flow through the feed spacer and in the flow path where the water can be extracted. However, the sealing devices are incapable of tolerating elevated temperatures.

Hence, in conventional reverse osmosis processes, the feed stream must be cooled down below 45°C before subjecting the feed stream to a reverse osmosis filtration step. The is very inconvenient and energy inefficient step, particularly when a multi-step filtration process is required.

Conversely, the improved reverse osmosis membranes described herein can withstand temperatures higher than 50°C.

For example, as described in more detail below, the aqueous material is subjected to microfiltration step before the reverse osmosis step to substantially remove particulate contaminants from the aqueous material.

The microfiltration step is generally conducted at temperatures between 50°C to about 90° to facilitate the solubility of non-particulate contaminants in water and avoid agglomeration of the particulate contaminant.

For example, waste water obtained from polyvinyl polymerisation processes generally contains PVA attached to PVC particles. PVA acts as a binder for the particles together and increases the bridging therebetween. However, PVA solubility in water increase with the water temperature. Hence, it is desirable to conduct the microfiltration step at operating temperatures in the range of about 50°C to about 90°C.

Additionally, higher temperatures decrease the occurrence of biofouling and bacteria growth caused by surfactants and other chemical contaminants contained in waste water, particularly when derived from chemical processes, such as polyvinyl polymerisation.

Cooling of the water prior to undergoing reverse osmosis treatment is also undesirable because of loss of heat contained in the water and the additional energy and time required to cool the water to a temperature suitable for the reverse osmosis filtration step.

Advantageously, reverse osmosis membranes described herein do not include traditional sealing device and are made of material that tolerate elevated temperatures.

Some forms described herein use an internal recirculation system with a bleed off, typically in the form of a bleed off valve, to control the overall recovery of recycled water.

Additionally and advantageously, water recovered by using the reverse osmosis method as described above can be efficiently reused in subsequent chemical processes that require high temperature feed water.

As mentioned above, the method of removing contaminants from an aqueous material according to the invention includes separation or filtration steps for separating unwanted particulate and non-particulate contaminants from the feed stream. Forms of the separation steps include a multi stage process comprising two or more individual separation steps as discussed below.

As schematically illustrated in Figure 4, form of the method comprises subjecting an aqueous feed stream 50 to a first filtration step (microfiltration) 200 to substantially remove particulate contaminants from the aqueous feed stream thereby forming a partially filtered aqueous material 220. The first filtration step also generates a residue stream 222 comprising a high concentration of the filtered particulate contaminants removed from the feed stream 50.

The partially filtered aqueous material 220 is then subjected to a second filtration step (reverse osmosis) 100 to remove at least part of the remaining contaminants from the partially filtered aqueous material to form a recovered portion of the aqueous material 120 in which the amount of contaminant is reduced to an amount allowing re-use of the recovered portion of the aqueous material. The reverse osmosis step 100 is conducted at a temperature higher than 50°C as described above.

In some forms of the method, the crossflow velocity ranges from about 0.1 m/s to about 5 m/s, typically ranging from about 0.5 m/s to 1 m/s.

In some forms, the microfiltration step removes particulate contaminants having a particle size larger than 0.5 µm, thereby forming a partially filtered aqueous material suitable to be further processed with a reverse osmosis filtration step.

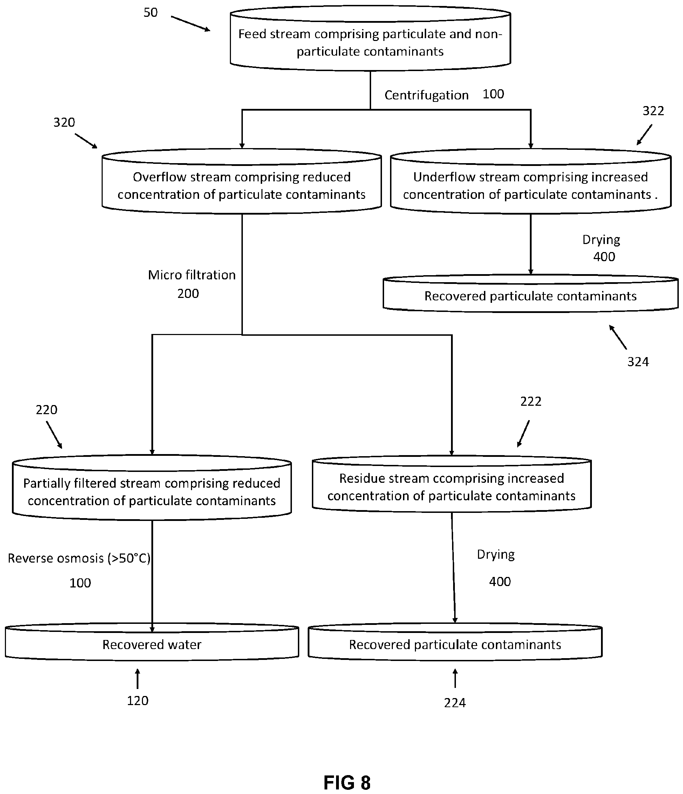

In some forms, the residue aqueous stream 222 comprising increased concentration of particulate contaminants, is subjected to a drying step 400 to recover selected particulate contaminants 224 such as PVC particles. A schematic illustration of this process is found on the right side of Figure 4 and the bottom right side of Figure 8.

In forms where the aqueous material includes particulate contaminants larger than 10 µm, the microfiltration step is preceded by a separation/pre-treatment step to reduce the concentration of particulate contaminants in the aqueous feed stream. Details of the separation/pre-treatment step are provided below with reference to Figure 8.

In some forms, the microfiltration step 200 includes passing the aqueous material through one or more microfiltration membranes with pore sizes in the range between about 0.05 µm and 1 µm. In other forms the pore sizes of the microfiltration membranes are in the range between about 0.2 µm to 0.4 µm.

In yet other forms, the microfiltration membranes have pore sizes suitable for removing particulate contaminants having a specific size range.

In some forms, the microfiltration membranes and their housing can withstand operating temperatures of up to about 85°C and further are tolerant of free chlorine being present in the aqueous material being treated, such as for example, being able to tolerate free chlorine at concentrations of up to about 1 ppm.

In some forms, the selection of the microfiltration membranes is determined by the suitability of the microfiltration membranes for operating more or less continuously at elevated temperatures, such as for example, more or less continuously operating at temperatures in the range from about 50°C to about 90°C.

Further, selecting microfiltration membranes particularly suited to more or less continuous operation at elevated temperatures of about 80 to 85°C, enhances the efficiency of the treatment and/or recovery process of the water.

Although the microfiltration membrane can be made from any suitable or convenient material, suitable polymers for such membranes include polyether sulphone (PES), polysulphone (PS), polyvinylidenefluoride (PvDF), polytetrafluoroethylene (PTFE), selected inorganic membrane materials including compositions of or containing ceramics, sintered stainless steel or combinations containing one or more such materials.

Suitable microfiltration membranes may be in a number of forms based on the morphology of the pore structure of the membranes. The preferred form of membrane is asymmetric membranes which have size-determining pores on the feed side of the membrane and larger pores behind these size-determining pores. These membranes have lower pressure drops across the membrane and any solid particles that pass through the outer size determining layer can continue through the membrane without becoming permanently lodged.

Other membranes include homogenous membranes, where the pores are consistent throughout the membrane structure, and torturous path membranes, in which the pore size is determined by the narrowest pathway through a spongelike structure.

Forms of the microfiltration membranes include modifiers, typically modifiers to convert the membranes from being substantially hydrophobic to being substantially hydrophilic, and also to allow passage of water through the membranes. Suitable polymers for modifying the properties or characteristics of the microfiltration membranes include poly vinyl poly pyrrolidone (PVPP).

Modification of the base microfiltration membrane to convert or alter its characteristics or properties can be done in any suitable or convenient time using any suitable or convenient material. In forms, the modifying material or modifier is mixed with the membrane polymer prior to the spinning of the membranes followed by removal from the membrane material to form the membrane pores. Such addition and removal of the modifier leaves a residual coating on the surface of the pores of the membrane, modifying the surface chemistry of the membrane to make the surface hydrophilic thus allowing passage of water through the membrane to remove unwanted materials.

Further, the material from which the housing of the microfiltration membrane is manufactured can be any suitable or convenient material. Examples of materials for making the housing include chlorinated PVC (see PVC), PES and stainless steel.

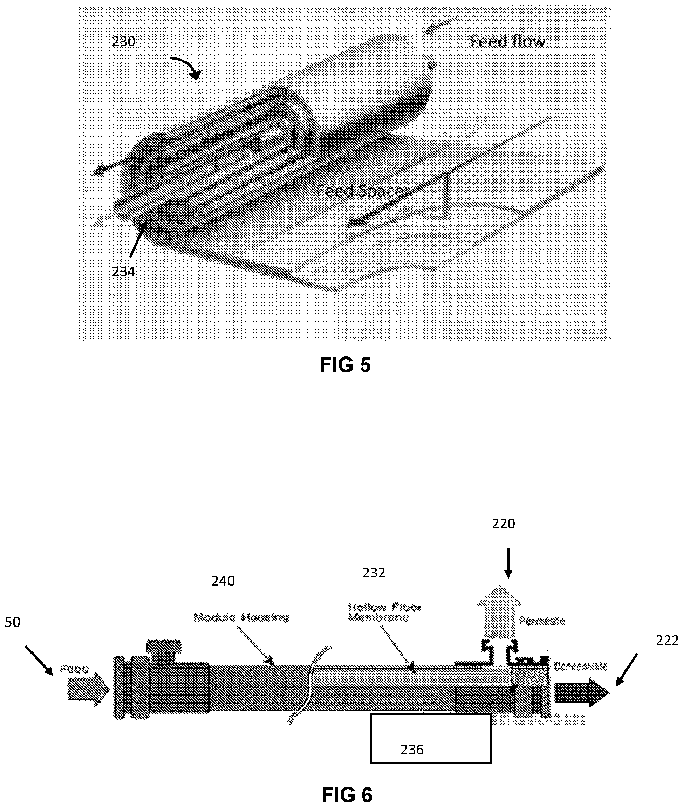

An example of microfiltration membrane is shown in Figure 5.

Some forms of the microfiltration membranes 230 include tubular or hollow fibre membranes. In some forms, typically tubular or hollow fibre membranes having a central lumen 234. In some forms, the tubular hollow fibre membranes have the feed flow directed to the central lumen of the membrane.

In some forms, the membranes allow fluid flow over the whole area of the membrane which prevents settling or slow flow of suspended particles, typically PVC fines, which can result in accumulation of solid particles within the membrane thereby blocking the membrane or reducing the efficiency of the membrane to remove contaminants.

In some forms, the membranes 232 are arranged in membrane modules 240 as schematically shown in Figure 6.

In the described example the membrane module is assembled from a bundle of tubular or hollow fibre membrane.

However, membrane modules can have any convenient or suitable form, type, profile, arrangement or similar. Additionally, the membrane module can have any number of individual fibre membrane. For example, there can be between about 1 and 10,000 individual fibre membranes in each membrane module and each membrane module may have between about 0.1 m² and 100 m² of membrane surface area.

The membrane module can have any suitable or desirable dimensions. In some embodiments the membrane modules are between about 1 m and 2 m in length and have a diameter in the range of about 25 mm to 300 mm.

Typically, the internal diameter of the membrane fibres or tubes is in the range of from about 0.7 mm to about 25 mm.

In some forms, the microfiltration process operates under pressure or is part of a pressurised system.

In the described example, the microfiltration process operates under pressure provided by the recirculation pump or a separate pressure pump.

In some forms, the driving pressure is in the range of about 0.2 bar to about 3 bar. In some other form the driving pressure is in the range of about 0.4 bar to about 1.5 bar.

The flow through (flux) membrane is measured against the surface area of the membrane. In some forms, such flow through ranges from about 10 L per metre squared per hour to about 200 L per metre squared per hour. In some other forms, such flow through ranges from about 40 L per metre squared per hour to about 80 L per metre squared per hour.

As mentioned above, when the aqueous material includes large particulate contaminants the initial step of the multistage filtration process is the reduction of the amount of particulate contaminants in the aqueous material.

An overview of a three-step process is schematically illustrated in Figure 8 and a summary of the method steps is provided below.

In broad terms, according to this example, an aqueous material to be recovered comprises one or more contaminants including particulate contaminants. The aqueous material is provided. The aqueous material may be, for example, waste water derived from a chemical process, such as PVC polymerisation reactions.

The first method step comprises subjecting the aqueous material to a pre-treatment step to reduce the concentration of particulate contaminants in the aqueous material to form a pre-treated aqueous material.

The second method step comprises subjecting the pre-treated aqueous material to a first filtration step to substantially remove the particulate contaminants from the aqueous material thereby forming a partially filtered aqueous material.

The third method step comprises subjecting the partially filtered aqueous material to a second filtration step to remove at least part of the remaining contaminants from the partially filtered aqueous material to form a recovered portion of the aqueous material in which the amount of contaminant is reduced to an amount allowing re-use of the recovered portion of the aqueous material, wherein the second filtration step includes passing the aqueous material across a partially permeable membrane at a temperature higher than 50°C.

The first filtration step includes subjecting an aqueous material pre-treated to remove larger particulates to microfiltration. The second filtration step includes subjecting an aqueous material, partially filtered to remove the particulate contaminants, to reverse osmosis.

As mentioned above, aqueous material containing large particulate contaminants are not suitable for microfiltration.

Particles larger than 10 µm tend to slow the filtration rate due and block the membranes' pores.

In particular, PVC fines, are known to be difficult to filter for their tendency to agglomerate and block filter openings or apertures bigger than the size of a PVC particle. For example, PVC particles of a size in the range of about 10 µm to about 50 µm can block a screen having openings of 200 µm.

Referring now to Figure 8, according to the described example, an aqueous feed stream 50 is subjected to centrifugation 100 to reduce the number of particulate contaminants in the aqueous feed stream. Centrifugation of the aqueous feed stream is a pre-treatment that removes particulate contaminants having a diameter of at least 10 µm, thereby forming an aqueous feed stream suitable to be subjected to microfiltration.

In particular, the aqueous feed stream is directed to a hydrocyclone to form an overflow stream 320 and an underflow stream 322 wherein the overflow stream comprises a reduced concentration of particulate contaminants compared to the underflow stream.

The underflow stream is directed to a particulate contaminants recovery process as shown in the top right side of Figure 8. The recovery process includes drying 400 the underflow stream to recover selected particulate contaminants such as PVC particles 324. It should be noted that this is an optional step that is only performed only if there is desire in recovering selected type of particulate contaminants.

The underflow stream is optionally (and not shown) directed to a second hydrocyclone to form an overflow stream that is combined with the aqueous material. In some forms the recovery ratio for this process in the range of about 80% to 90% based on the amount of water introduced into the second hydrocyclone.

The overflow stream 320 can be processed in accordance with the method illustrated in Figure 4.

In some forms of the process, the amount of water collected in the overflow stream of the hydrocyclone ranges from about 85% to about 95% of the amount of incoming water introduced into the hydrocyclone and the amount of water collected from the underflow stream of the hydrocyclone ranges from about 5% to 15% of the amount of water introduced tangentially to the central core of the hydrocyclone.

In some forms of the process, typically, the hydrocyclone can remove up to about 95% of suspended solids having more or less a 10 µm diameter and a specific gravity of 1.4, which is a typical characteristic of the small size particles produced by PVC polymerisation reactions, and is the normal range for PVC fines.

In some forms of the process the overflow water from the second hydrocyclone can be directed to the feed tank of the apparatus for reprocessing or can be directed to a storage facility, such as for example a clarified water tank. In some forms of the process the overall recovery of water using a 2 stage hydrocyclone process is greater than about 95%, and typically is about 97.5%.

It is to be noted that the objective of the hydrocyclones clarification is the reduction of the amount of suspended solids to a level sufficient to enable the water to be treated by subsequent treatment steps, including additional filtration steps, such as for example micro filtration using microfiltration membranes to further improve the quality of the water enabling reuse of the water in subsequent polymerisation processes.

The above described methods according to the invention are performed in an apparatus that includes filtration modules for different filtration steps. The modules of subsequent filtration step are in fluid communication.

A first filtration module is configured to receive an aqueous material feed stream comprising one or more contaminants, including particulate contaminants, and reduce the concentration of particulate contaminants in the aqueous material feed stream to form a pre-treated aqueous material stream.

In some forms, the first filtration module includes at least one hydrocyclone that is configured to remove particulate contaminants having a diameter of at least 10 µm.

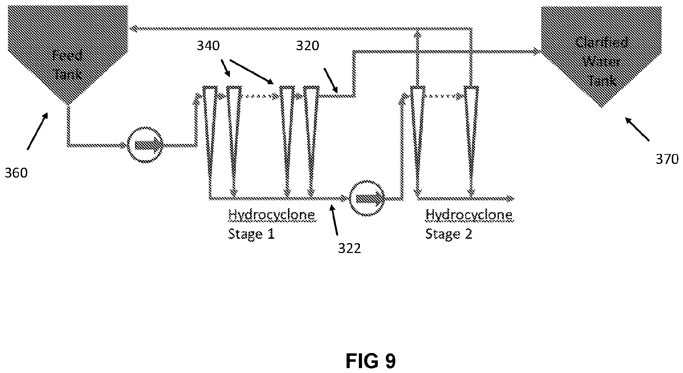

A schematic of an apparatus of hydrocyclones is shown in Figure 9.

The apparatus includes multiple hydrocyclones 340 disposed between a feed tank 360 and a clarified water collection tank 370.

In the described form the installation includes 6 hydrocyclones. However, in other forms the installation includes any suitable number of hydrocyclones.

In exemplary forms, the hydrocyclones have a diameter between about 20 mm to about 100 mm or from about 40 mm to about 50 mm.

The hydrocyclones can be sized to provide a flow of from about 1 m³/hour to about 10 m³/hour, preferably from about 2 m³/hour to about 5 m³/hour.

Operating conditions of the hydrocyclone can generate up to about 1,000G.

During operation, water is pumped into the hydrocyclone at a pressure ranging from about 200 kPa to about 500 kPa, typically ranging from about 300 kPa to about 350 kPa.

A second filtration module that is in fluid communication with the first filtration module, is configured to receive the pre-treated aqueous material stream and to substantially remove the particulate contaminants from the aqueous material stream to form a partially filtered aqueous material stream.

In an exemplary form, the second filtration module includes at least one microfiltration membrane configured to remove particulate contaminants having a particle size larger than 0.5 µm.

A third filtration module, that is in fluid communication with the second filtration module is configured to receive a partially filtered aqueous material stream. The third filtration module includes a partially permeable membrane that can withstand operating temperatures higher than 50°C and is configured to remove at least part of the remaining contaminants to form a recovered portion of the aqueous material feed stream in which the amount of contaminants is reduced to allow re-use of the recovered portion of the aqueous material feed stream.

The third filtration module can be used independently to removing contaminants from an aqueous material feed stream containing one or more non-particulate contaminants.

In some forms of the method and apparatus for removing contaminants from an aqueous material, the feed flow for the polymerisation reaction can include recycled water from previous polymerisation reactions. Typically, the apparatus can include membrane skid pipework for containing the membrane modules. In some forms, the feed flow is recycled within the membrane skid pipework by the use of a recirculation pump. More typically, the recirculation pump provides a flow which maintains a crossflow velocity along the length of the membrane module which assists in preventing caking of solid particles and ensures adhesion of the particles to the membranes surfaces is limited to further facilitate continued efficient operation of the membrane modules

Some forms of the installation in which the process is carried out include a backwash pump for back washing the membrane and membrane modules to assist in maintaining the membranes and membrane modules in an efficient working condition by removing unwanted material is deposited in the pores of the membranes.

In some forms, back washing of microfiltration membranes and modules is a multistep process which includes backwashing without crossflow, backwashing with crossflow in the forward direction or in the reverse direction and flushing with and without backwash flow in the forward or reverse directions.

### ADVANTAGES

One or more forms of the process of the present description include one or more of the following:
Lower capital costs as some of the stages of previously available and used processes are eliminated thereby resulting in less plant and equipment being required in which to carry out the processes of the present description.
Lower operating costs since the energy required in the stages eliminated from the processes of the present description, typically the energy required in the cooling stage, are not required in the processes of the present description. Additionally, in the processes of the present description, microbiological fouling of plant and equipment are reduced.
Furthermore, there is reduced plant and equipment down time owing to fouling or blocking of plant and equipment, typically small sized openings, gaps, apertures or similar within the plant and equipment.
There is also increased membrane life due to reduced need for chemical cleaning to remove the bio-fouling.
Finally, waste water recovered using the processes of the present description is of increased value due to the heat energy which can be recovered and returned to the reactor vessel or for other uses around the installation site, such as for example, as boiler feed, owing to not having to cool the waste water stream being treated to avoid blocking or clogging of the plant and equipment.
It is to be understood that, if any prior art publication is referred to herein, such reference does not constitute an admission that the publication forms a part of the common general knowledge in the art, in Australia or any other country.
In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A method of removing contaminants from an aqueous material feed stream derived from a polymerisation process, the method comprising the steps of:
providing an aqueous material feed stream from a polymerisation process, comprising one or more contaminants including particulate and non-particulate contaminants;
centrifuging the aqueous material feed stream in a hydrocyclone to form an overflow stream and an underflow stream wherein the overflow stream comprises a reduced concentration of particulate contaminants compared to the underflow stream; and
subjecting the overflow stream to a microfiltration filtration step to substantially remove particulate contaminants from the aqueous material feed stream thereby forming a partially filtered aqueous material stream; and,
subjecting the partially filtered aqueous material stream to reverse osmosis at a temperature higher than 50°C to remove at least part of the non-particulate contaminants to form a recovered aqueous stream having a reduced amount of contaminant for re-use in another polymerisation process.

2. The method according to claim 1, wherein centrifuging the aqueous material feed stream includes removing particulate contaminants having a diameter of at least 10 µm.

3. The method according to claim 1, wherein centrifuging the aqueous material feed stream includes directing the underflow stream to a hydrocyclone to form an overflow stream that is combinable with the aqueous material feed stream.

4. The method according to claim 1, wherein centrifuging the aqueous material feed stream includes:
(i) directing the aqueous material feed stream to a hydrocyclone to form a first overflow stream and a first underflow stream; and
(ii) directing the first overflow stream to a hydrocyclone to form a second overflow stream and a second underflow stream wherein the second overflow stream comprises a reduced concentration of particulate contaminants compared to the second underflow stream,
wherein subjecting the overflow stream to a microfiltration filtration step comprises subjecting the second overflow stream obtained in step (ii) to the microfiltration filtration step.

5. The method according to claim 4, including directing the first underflow stream and/or the second underflow stream to a hydrocyclone to form an overflow stream that is combinable with the aqueous material feed stream.

6. The method according to claim 1 or claim 4, wherein the step of subjecting the overflow stream to microfiltration is conducted at temperatures in the range from about 50°C to about 90°C.

## Patentansprüche

1. Verfahren zum Entfernen von Verunreinigungen aus einem Beschickungsstrom von wässrigem Material, der aus einem Polymerisationsprozess stammt, wobei das Verfahren die folgenden Schritte umfasst:
Bereitstellen eines Beschickungsstroms von wässrigem Material aus einem Polymerisationsprozess, umfassend eine oder mehrere Verunreinigungen, einschließlich partikulärer und nichtpartikulärer Verunreinigungen;
Zentrifugieren des Beschickungsstroms von wässrigem Material in einem Hydrozyklon, um einen Überlaufstrom und einen Unterlaufstrom zu bilden, wobei der Überlaufstrom eine im Vergleich zu dem Unterlaufstrom verringerte Konzentration an partikulären Verunreinigungen umfasst; und
Unterziehen des Überlaufstroms einem Mikrofiltrationsschritt, um partikuläre Verunreinigungen im Wesentlichen aus dem Beschickungsstrom von wässrigem Material zu entfernen, wodurch ein teilweise gefilterter Strom von wässrigem Material gebildet wird; und
Unterziehen des teilweise gefilterten Stroms von wässrigem Material einer Umkehrosmose bei einer Temperatur von mehr als 50 °C, um mindestens einen Teil der nichtpartikulären Verunreinigungen zu entfernen, um einen rückgewonnenen wässrigen Strom mit einer reduzierten Menge an Verunreinigungen zur Wiederverwendung in einem anderen Polymerisationsverfahren zu bilden.

2. Verfahren nach Anspruch 1, wobei das Zentrifugieren des Beschickungsstroms von wässrigem Material das Entfernen von partikulären Verunreinigungen mit einem Durchmesser von mindestens 10 µm beinhaltet.

3. Verfahren nach Anspruch 1, wobei das Zentrifugieren des Beschickungsstroms von wässrigem Material das Leiten des Unterlaufstroms zu einem Hydrozyklon beinhaltet, um einen Überlaufstrom zu bilden, der mit dem Beschickungsstrom von wässrigem Material kombinierbar ist.

4. Verfahren nach Anspruch 1, wobei das Zentrifugieren des Beschickungsstroms von wässrigem Material Folgendes beinhaltet:
(i) Leiten des Beschickungsstroms von wässrigem Material zu einem Hydrozyklon, um einen ersten Überlaufstrom und einen ersten Unterlaufstrom zu bilden; und
(ii) Leiten des ersten Überlaufstroms zu einem Hydrozyklon, um einen zweiten Überlaufstrom und einen zweiten Unterlaufstrom zu bilden, wobei der zweite Überlaufstrom eine im Vergleich zu dem zweiten Unterlaufstrom verringerte Konzentration an partikulären Verunreinigungen umfasst,
wobei das Unterziehen des Überlaufstroms einem Mikrofiltrationsschritt das Unterziehen des in Schritt (ii) erhaltenen zweiten Überlaufstroms dem Mikrofiltrationsschritt umfasst.

5. Verfahren nach Anspruch 4, beinhaltend das Leiten des ersten Unterlaufstroms und/oder des zweiten Unterlaufstroms zu einem Hydrozyklon, um einen Überlaufstrom zu bilden, der mit dem Beschickungsstrom von wässrigem Material kombinierbar ist.

6. Verfahren nach Anspruch 1 oder Anspruch 4, wobei der Schritt des Unterziehens des Überlaufstroms einer Mikrofiltration bei Temperaturen im Bereich von etwa 50 °C bis etwa 90 °C durchgeführt wird.

## Revendications

1. Procédé d'élimination de contaminants d'un flux d'alimentation en matériau aqueux issu d'un procédé de polymérisation, le procédé comprenant les étapes consistant à :
fournir un flux d'alimentation en matériau aqueux issu d'un procédé de polymérisation, comprenant un ou plusieurs contaminants comprenant des contaminants particulaires et non particulaires ;
centrifuger le flux d'alimentation en matériau aqueux dans un hydrocyclone pour former un flux de surverse et un flux de sous-verse, le flux de surverse comprenant une concentration réduite de contaminants particulaires par rapport au flux de sous-verse ; et
soumettre le flux de surverse à une étape de filtration par microfiltration pour éliminer sensiblement les contaminants particulaires du flux d'alimentation en matériau aqueux, formant ainsi un flux de matériau aqueux partiellement filtré ; et
soumettre le flux de matériau aqueux partiellement filtré à une osmose inverse à une température supérieure à 50°C pour éliminer au moins une partie des contaminants non particulaires pour former un flux aqueux récupéré ayant une quantité réduite de contaminants pour une réutilisation dans un autre procédé de polymérisation.

2. Procédé selon la revendication 1, dans lequel la centrifugation du flux d'alimentation en matériau aqueux comprend l'élimination des contaminants particulaires ayant un diamètre d'au moins 10 µm.

3. Procédé selon la revendication 1, dans lequel la centrifugation du flux d'alimentation en matériau aqueux comprend l'orientation du flux de sous-verse vers un hydrocyclone pour former un flux de surverse qui peut être combiné avec le flux d'alimentation en matériau aqueux.

4. Procédé selon la revendication 1, dans lequel la centrifugation du flux d'alimentation en matériau aqueux comprend :
(i) l'orientation du flux d'alimentation en matériau aqueux vers un hydrocyclone pour former un premier flux de surverse et un premier flux de sous-verse ; et
(ii) l'orientation du premier flux de surverse vers un hydrocyclone pour former un second flux de surverse et un second flux de sous-verse, le second flux de surverse comprenant une concentration réduite de contaminants particulaires par rapport au second flux de sous-verse,
dans lequel la soumission du flux de surverse à une étape de filtration par microfiltration comprend la soumission du second flux de surverse obtenu à l'étape (ii) à l'étape de filtration par microfiltration.

5. Procédé selon la revendication 4, comprenant l'orientation du premier flux de sous-verse et/ou du second flux de sous-verse vers un hydrocyclone pour former un flux de surverse qui peut être combiné avec le flux d'alimentation en matériau aqueux.

6. Procédé selon la revendication 1 ou la revendication 4, dans lequel l'étape consistant à soumettre le flux de surverse à une microfiltration est réalisée à des températures dans la plage d'environ 50°C à environ 90°C.
